(19) Europäisches Patentamt
European Patent Office
Office européen des brevets

(11) **EP 3 360 802 B1**

(12) **FASCICULE DE BREVET EUROPEEN**

(45) Date de publication et mention
de la délivrance du brevet:
**14.08.2019 Bulletin 2019/33**

(21) Numéro de dépôt: **18155426.2**

(22) Date de dépôt: **06.02.2018**

(51) Int Cl.:
***B64G 1/10*** *(2006.01)*     ***B64G 1/40*** *(2006.01)*
***B64G 1/64*** *(2006.01)*     *B64G 1/26* *(2006.01)*
*B64G 1/28* *(2006.01)*     *B64G 1/32* *(2006.01)*
*B64G 1/36* *(2006.01)*     *F02K 9/94* *(2006.01)*

(54) **SATELLITE À PROPULSION LASER PAR ABLATION**

**SATELLIT MIT LASERANTRIEB DURCH ABLATION**

**SATELLITE WITH LASER PROPULSION BY ABLATION**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.02.2017 FR 1700147**

(43) Date de publication de la demande:
**15.08.2018 Bulletin 2018/33**

(73) Titulaire: **Thales**
**92400 Courbevoie (FR)**

(72) Inventeur: **GARUS, Alexandre**
**06810 AURIBEAU SUR SIAGNE (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 2 774 855**     **WO-A1-94/05546**
**US-A1- 2011 121 139**     **US-A1- 2011 302 906**
**US-B1- 6 530 212**

# Description

L'invention porte sur un satellite à propulsion laser par ablation.

La propulsion laser par ablation consiste, à partir d'un laser, à focaliser le faisceau laser sur un combustible solide, et la propulsion du satellite est assurée par l'éjection de matière sous forme de plasma.

La présente invention porte sur les domaines de la valorisation de déchets orbitaux, de la réalisation de changements d'orbites, et de scénarii de missions spécifiques de mise en orbite, de désorbitation, ou d'intervention sur satellite.

On cherche alors à limiter le coût des changements d'orbites, à valoriser les déchets spatiaux, et à effectuer des interventions sur différents satellites à moindre coût.

Les solutions actuellement implémentées pour les changements d'orbite consistent à embarquer à bord des satellites depuis la Terre le propulsif nécessaire pour générer la poussée en orbite. Ce propulsif peut être dédié à une propulsion chimique ou électrique.

Ces solutions présentent de nombreux désavantages, dont les suivants :

- une propulsion chimique présente une faible impulsion spécifique ou ISP, la masse à embarquer à bord du satellite est très importante, or le coût actuel d'un kilo en orbite basse est de l'ordre de 20 k€;
- une propulsion de type électrique présente une ISP plus élevée, ce qui réduit la masse à embarquer. Un gaz rare est généralement employé, typiquement du Xénon, dont le cours actuel avoisine 10k€/kg auquel il faut ajouter le prix de la mise en orbite. Pour une propulsion électrique, une ISP plus forte implique cependant une poussée plus faible et donc des durées plus importantes de changement d'orbite.

Des solutions alternatives de propulsion sont également connues dans la littérature et démontrées au sol pour certaines. Toutes les solutions alternatives proposées impliquent d'utiliser un propulsif lancé avec le satellite, d'utiliser un propulsif raffiné sur Terre et lancé sur une orbite de stockage ce qui a un coût rédhibitoire, ou d'extraire de l'eau depuis un corps céleste, ce qui implique d'aller chercher un astéroïde et de trouver suffisamment d'eau à en extraire.

Le document US 6 530 212 divulgue un satellite comprenant un dispositif de propulsion par ablation laser.

En ce qui concerne la valorisation des déchets spatiaux, une masse très importante de satellites a été mise en orbite. De nombreux satellites anciens sont devenus des déchets qui menacent les satellites actuels. Il est donc envisagé de les désorbiter ou de la placer sur des orbites dites orbites cimetières. Ces contraintes vont être de plus en plus importantes avec l'évolution de la loi spatiale.

Des solutions envisagées et non encore implémentées pour résoudre ce problème sont les suivantes:

- des désorbiteurs à usage unique (un seul déchet spatial désorbité) ou multiple (plusieurs déchets désorbités). Un désorbiteur à usage unique implique de construire et lancer un satellite pour en désorbiter un autre. Le coût est prohibitif. La réutilisation d'un désorbiteur est nettement plus intéressante. Cependant, à l'heure actuelle, il n'existe pas encore de marché autre qu'institutionnel pour ce type de mission. De plus, le désorbiteur ne peut embarquer du propulsif que pour un nombre limité de missions. L'écart de vitesse (delta-V) réalisable pour, par exemple, effectuer une manoeuvre de changement d'orbite est limité dès la mise en fonctionnement du satellite.
- l'utilisation de lasers très forte puissance, de l'ordre du MW depuis le sol pour faire descendre dans l'atmosphère des déchets de petite taille.
- la création d'une usine de recyclage en orbite, qui ne prévoit pas de solution pour aller récupérer les déchets sur les différentes orbites.

Un but de l'invention est de pallier les problèmes précédemment cités.

Aussi, il est proposé, selon un aspect de l'invention, un satellite à propulsion laser par ablation comprenant :

- un dispositif de gestion d'attitude et d'orbite du satellite ;
- un dispositif de capture et éventuellement de traitement du corps spatial cible ;
- un dispositif de communication avec l'extérieur ;
- un dispositif de propulsion par ablation laser comprenant au moins un laser comprenant un module de gestion du ou des lasers adapté pour déterminer le ou les faisceaux laser à générer sur le corps spatial cible capturé en fonction du déplacement souhaité pour le satellite, et un dispositif d'inspection visuel du corps spatial cible.

Un tel satellite peut donc utiliser un corps spatial cible, tel un déchet orbital, comme réservoir de propulsif utilisé pour une propulsion par ablation laser.

L'impact d'un ou plusieurs lasers sur un corps spatial cible génère une force en vaporisant la surface de celui-ci, et sert de moyen de propulsion tout en transformant un matériau en gaz.

Un tel satellite peut aller récupérer un premier débris spatial permettant de constituer un réservoir de propulsif, effectuer une ou plusieurs missions (maintenance sur orbite, récupération et mise à poste d'un autre satellite,...) en utilisant le débris ou déchet spatial pour la réalisation de l'écart de vitesse à créer pour, par exemple, réaliser une manoeuvre de changement d'orbite. Le déchet est consommé au fur et à mesure. Le satellite peut ensuite aller récupérer un autre déchet afin reconstituer la réserve de propulsif.

Ainsi, il n'est donc pas nécessaire de placer du propulsif en orbite (20k€/kg), le satellite pouvant utiliser des ressources in-situ. Le satellite n'embarque pas de propulsif pour toute sa durée de fonctionnement, ce qui réduit sa masse au lancement et le besoin de poussée lors de la réalisation des variations de vitesse.

Les déchets orbitaux deviennent des réservoirs de propulsif, leur valeur n'est plus négative via le coût d'une mission de désorbitation mais redevient positive, à comparer au coût de la mise en orbite de la même masse de propulsif depuis le sol. Les déchets spatiaux sont progressivement vaporisés et présentent bien moins de risques pour les autres satellites. Cette forme d'utilisation des déchets spatiaux est plus simple que le développement d'une usine de retraitement en orbite.

Le satellite selon l'invention utilise la masse d'objets en orbite comme propulsif à l'aide d'une propulsion par ablation laser, ce qui permet la réalisation de nombreuses missions tels que l'enlèvement de débris actifs ou ADR pour acronyme de "Active Débris Removal" en langue anglaise, la mise à poste, la maintenance sur orbite, le retour et l'exploitation d'astéroïdes.

Dans un mode de réalisation, le satellite comprend un dispositif de gestion de l'attitude du corps spatial cible à capturer commandant le dispositif de gestion d'un ou plusieurs lasers et adapté pour déterminer l'attitude et/ou la vitesse de rotation angulaire d'un corps spatial cible, et la distance séparant le corps spatial cible et le satellite.

Ainsi il est possible de gérer le spin ou rotation du corps spatial cible sur lui-même, et/ou son attitude, en améliorant l'interception, en limitant la consommation d'énergie, et en limitant les risques de collision avec le corps spatial cible, notamment en déspinant le corps spatial cible, i.e. en limitant la rotation du corps spatial cible sur lui-même.

Selon un mode de réalisation, le dispositif de gestion de l'attitude du corps spatial cible à capturer comprend un lidar, et/ou une caméra stéréoscopique, et/ou d'une caméra munie d'un dispositif de détermination de la distance à partir d'une succession temporelle d'images de la caméra, et/ou d'un dispositif configuré pour tenir compte d'un modèle numérique représentatif de la forme et/ou de la texture et/ou des matériaux du corps spatial cible.

Ainsi, grâce à la connaissance de l'attitude de l'élément cible, la boucle de contrôle peut déterminer le couple à appliquer afin de corriger l'attitude de l'élément cible. Grâce à la connaissance de la distance, il est possible de mieux focaliser le laser et donc contrôler plus finement la force et donc le couple appliqué à l'élément cible.

Dans un mode de réalisation, le dispositif de gestion d'attitude et d'orbite du satellite comprend un capteur de direction solaire, et/ou un magnétomètre, et/ou un capteur viseur d'étoiles, et/ou un capteur de détermination de la Terre, et/ou récepteur de système de navigation par satellites, et/ou des tuyères, et/ou des roues à réaction, et/ou des actionneurs gyroscopiques, et/ou des magnéto-coupleurs, et/ou un accéléromètre, et/ou une centrale inertielle.

Ainsi, il est possible de déterminer et contrôler l'attitude et l'orbite du satellite.

Selon un mode de réalisation, le dispositif de gestion de l'attitude du corps spatial cible à capturer est configuré pour tenir compte d'un modèle de perturbation solaire et/ou d'un modèle de perturbation atmosphérique et/ou d'un modèle de perturbation magnétique.

Ainsi, il est possible de déterminer l'attitude du corps spatial cible avec une précision plus importante.

Selon un mode de réalisation, le dispositif de capture et éventuellement de traitement du corps spatial cible comprend une interface lanceur/satellite et/ou un dispositif d'accrochage comme une pince, un harpon, fixé au satellite par un élément intermédiaire comme un panneau, un bras robotique, ou un câble.

Dans un mode de réalisation, un laser est continu ou impulsionnel, fixe ou mobile par rapport au satellite, éventuellement pourvu d'un système de guidage du faisceau, et éventuellement pourvu d'un ensemble de protection de l'optique du laser par un flux de gaz.

Selon un mode de réalisation, le dispositif de capture et de traitement du corps spatial cible comprend un dispositif de découpe du corps spatial cible, et/ou un dispositif de compactage du corps spatial cible, et/ou un dispositif de fusion/extrusion du corps spatial cible.

Ainsi il est possible de mettre en forme et stocker un matériau propulsif.

Dans un mode de réalisation, le satellite comprend une tuyère pour canaliser le flux de plasma créé par l'impact du ou des faisceaux laser sur le corps spatial cible.

Selon un mode de réalisation, le satellite comprend un dispositif magnétostatique pour contrôler et accélérer le jet de plasma créé par l'impact du ou des faisceaux laser sur le corps spatial cible.

Dans un mode de réalisation, le satellite comprend un dispositif électrostatique pour accélérer le jet de plasma créé par l'impact du ou des faisceaux laser sur le corps spatial cible.

Selon un mode de réalisation, le satellite comprend un dispositif à ondes radiofréquences pour accélérer le jet de plasma créé par l'impact du ou des faisceaux laser sur le corps spatial cible.

Il est également proposé, selon un autre aspect de l'invention, un procédé de propulsion spatial comprenant les étapes consistant à :

- capturer et éventuellement traiter un corps spatial cible ; et
- utiliser le corps spatial cible comme propulsif de propulsion par ablation laser.

L'invention sera mieux comprise à l'étude de quelques modes de réalisation décrits à titre d'exemples nullement limitatifs et illustrés par les dessins annexés sur lesquels :

- la figure 1 illustre schématiquement le principe de fonctionnement d'un satellite selon un aspect de l'invention ;
- la figure 2 illustre schématiquement un satellite selon un autre aspect de l'invention ;
- la figure 3 illustre schématiquement un exemple de tuyère de satellite selon un aspect de l'invention ;
- la figure 4 illustre schématiquement un exemple de tuyère avec grille électrostatique selon un aspect de l'invention ; et
- la figure 5 représente schématiquement un exemple de dispositif de compactage et de fusion.

Sur les différentes figures, les éléments ayant des références identiques sont identiques.

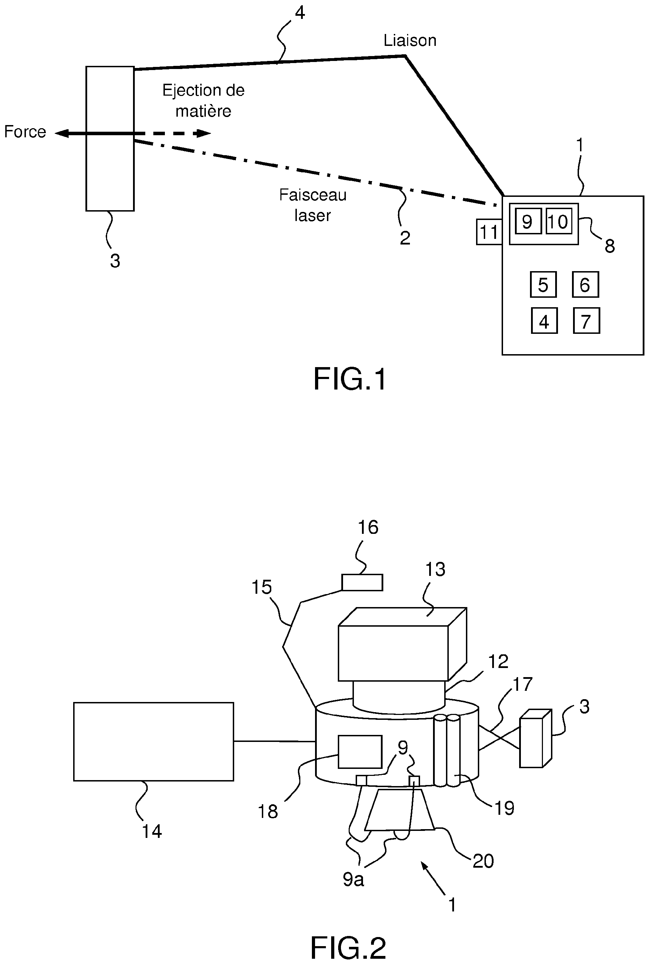

La figure 1 représente de manière simplifiée, un mode de réalisation, nullement limitatif, d'un satellite 1 selon un aspect de l'invention.

Le principe de la poussée y est illustré. L'impact d'un faisceau laser 2 produit un plasma et une éjection de matière au niveau de l'impact. Cette éjection de matière crée par réaction une force dans la direction opposée. Etant donné que le corps spatial cible 3 et le satellite 1 sont reliés mécaniquement par un dispositif 4 de capture du corps spatial cible 3, l'ensemble subit une accélération suivant la relation bien connue F=ma.

Le calcul de la force générée est donné par les formules qui suivent.

Le coefficient de couplage $C_m$, en Newton par Watt, pour un laser impulsionnel dans un régime de plasma établi est donné par la relation suivante:

$$C_m = 1.84\,e-4\,\frac{\Psi^{\frac{9}{16}} \cdot A^{-\frac{1}{8}}}{\left(I \cdot \lambda \cdot \sqrt{\tau}\right)^{\frac{1}{4}}}$$

dans laquelle :

- $I$ est l'intensité du laser, en Ampères
- $\lambda$ la longueur d'onde du laser, en mètres
- $\tau$ la durée de l'impulsion, en secondes
- $A$ le numéro de masse atomique moyen de la surface, adimensionnel
- $\Psi = \frac{A}{2} \cdot [Z^2(Z+1)]^{\frac{1}{3}}$  où  $Z = \frac{n_e}{n_i}$  est un coefficient d'ionisation proche de 1 en régime établi, adimensionnel.

A partir de cette équation, il est possible de déterminer la force générée lors de l'impact d'un laser en connaissant la puissance moyenne en watt apportée par le laser. La force moyenne exercée est donnée par la relation suivante :

$$F_{moyenne} = C_m \cdot P_{moyenne}$$

Il est possible de faire varier l'intégrale de la force sur une durée en modulant le nombre d'impulsion dans le temps et/ou en modulant la durée des impulsions laser, et/ou en modifiant la longueur d'onde du laser, et/ou en modifiant l'intensité du laser.

La modification de l'intensité du laser peut être effectuée grâce à un dispositif de collimation. En effet, l'intensité s'exprime selon la relation suivante :

$$I = \frac{P_{max}}{S}$$

dans laquelle:

- $P_{max}$ est la puissance maximum du laser, en Watts
- $S$ est la surface sur laquelle est concentré le laser, en m$^2$.

Il est donc possible de faire diminuer l'intensité du laser en délocalisant celui-ci, et l'effet est une augmentation du coefficient de couplage et donc une augmentation de la force appliquée.

La sélection du point à impacter sur la cible à un instant donné peut être faite de différentes manières, de préférence à partir d'un modèle numérique des surfaces du corps spatial cible. Pour chacune des surfaces élémentaires, il faut d'abord déterminer si elles sont visibles depuis le laser correspondant, par exemple avec un algorithme de lancer de rayons. Seules les surfaces visibles devront être considérées. Pour chacune de ces surfaces, il faut calculer l'angle entre la normale à la surface et le vecteur allant du centre de la surface vers le laser. Cet angle affecte la focalisation du laser en étalant la tache lumineuse créée par le laser.

A caractéristiques d'impulsion laser identique, il est possible de modifier le niveau de force généré en choisissant le point d'impact à partir de ces informations.

Enfin, une modulation de l'intégrale de la force est possible via la fréquence de répétition des impulsions dans le temps.

Le satellite 1 comprend un dispositif 5 de gestion d'attitude et d'orbite du satellite 1, et peut comprendre un dispositif 6 de gestion de l'attitude du corps spatial cible à capturer commandant le dispositif de gestion d'un ou plusieurs lasers. Le satellite 1 comprend également un dispositif 4 de capture et éventuellement de traitement du corps spatial cible 3. Le satellite 1 comprend aussi un dispositif 7 de communication avec l'extérieur, et un dispositif 8 de propulsion par ablation laser comprenant un ou plusieurs lasers et un module de gestion 10 du ou des lasers 9 adapté pour déterminer le ou les faisceaux laser 2 à générer sur le corps spatial cible 3 capturé en fonction du déplacement souhaité pour le satellite 1. Les lasers peuvent soit être dédiés à l'un des dispositifs 5, 6 et 8 de manière exclusive, soit être partagés entre ces dispositifs.

Le satellite 1 comprend également un dispositif 11 d'inspection visuel du corps spatial cible 3, comme une caméra située sur le satellite 1 ou sur le dispositif 4 de capture du corps spatial cible 3.

Le dispositif de gestion 6 de l'attitude du corps spatial cible 3 à capturer est adapté pour déterminer l'attitude et/ou la vitesse de rotation angulaire du corps spatial cible 3, et la distance séparant le corps spatial cible 3 et le satellite 1.

Le dispositif de gestion 6 de l'attitude du corps spatial cible 3 à capturer peut comprendre un lidar, et/ou une caméra stéréoscopique, et/ou d'une caméra munie d'un dispositif de détermination de la distance à partir d'une succession temporelle d'images de la caméra, et/ou d'un dispositif configuré pour tenir compte d'un modèle numérique représentatif de la forme et/ou de la texture et/ou des matériaux du corps spatial cible 3.

Le dispositif de gestion 5 d'attitude et d'orbite du satellite 1 peut comprendre un capteur de direction solaire, et/ou un magnétomètre, et/ou un capteur viseur d'étoiles, et/ou un capteur de détermination de la Terre, et/ou récepteur de système de navigation par satellites, et/ou des tuyères, et/ou des roues à réaction, et/ou des actionneurs gyroscopiques, et/ou des magnéto-coupleurs, et/ou un accéléromètre, et/ou une centrale inertielle.

Le dispositif de gestion 6 de l'attitude du corps spatial cible 3 à capturer peut être configuré pour tenir compte d'un modèle de perturbation solaire et/ou d'un modèle de perturbation atmosphérique et/ou d'un modèle de perturbation magnétique.

Le dispositif 4 de capture et éventuellement de traitement du corps spatial cible 3 comprend un dispositif d'accrochage comme une pince, un harpon, ou une interfacé lanceur/satellite, i.e. un dispositif d'accrochage du satellite à la fusée qui l'avait lancé, par exemple un dispositif magnétique ou mécanique, fixé au satellite par un élément intermédiaire tel un panneau, un bras robotique, ou un câble.

Un laser peut être continu ou impulsionnel, fixe ou mobile par rapport au satellite 1, éventuellement pourvu d'un système de guidage du faisceau, et éventuellement pourvu d'un ensemble de protection de l'optique du laser par un flux de gaz.

Le dispositif 4 de capture et de traitement du corps spatial cible peut comprendre un dispositif de découpe du corps spatial cible 3, et/ou un dispositif de compactage du corps spatial cible 3, et/ou un dispositif 18 de fusion/extrusion du corps spatial cible 3.

Le satellite 1 peut comprendre une tuyère 20 pour canaliser le flux de plasma créé par l'impact du ou des faisceaux laser 2 sur le corps spatial cible 3.

Le satellite 1 peut comprendre un dispositif magnétostatique pour contrôler le jet de plasma créé par l'impact du ou des faisceaux laser 2 sur le corps spatial cible 3.

Le satellite 1 peut comprendre un dispositif électrostatique ou magnéto hydro dynamique pour accélérer le jet de plasma créé par l'impact du ou des faisceaux laser 2 sur le corps spatial cible 3.

Le satellite 1 peut comprendre un dispositif à ondes radiofréquences pour accélérer le jet de plasma créé par l'impact du ou des faisceaux laser 2 sur le corps spatial cible 3.

Sur la figure 2 est illustré un satellite 1 disposant d'une interface lanceur/satellite 12 lui permettant de récupérer un autre satellite 13 nécessitant un changement d'orbite. Le satellite 1 est équipé de panneaux solaires 14 photovoltaïques utilisés afin de générer de l'électricité, pour un système de production et/ou de stockage d'énergie électrique.

Dans ce mode de réalisation, le dispositif 4 de capture et éventuellement de traitement d'un corps spatial cible 3, comprend un bras robotique de capture 15, pouvant être équipé d'outils interchangeables 16 pour accrocher un corps spatial cible 3 ou également effectuer des interventions techniques sur un autre satellite.

Le dispositif 4 de capture et éventuellement de traitement d'un corps spatial cible 3 comprend également une pince de maintien 17 d'un corps spatial cible 3 préalablement capturé par le bras 15. Le dispositif 4 de capture et éventuellement de traitement d'un corps spatial cible 3 comprend aussi un ensemble four/compacteur 18 permettant de faire fondre et compacter un ou plusieurs corps spatiaux cible 3. Après compactage, on obtient des barres de propulsifs 19 pouvant être stockées en réserve.

Le satellite 1 comprend une tuyère 20 pour canaliser le flux de plasma créé par l'impact du ou des faisceaux laser 2, en l'occurrence des deux lasers 9 sur le corps spatial cible 3, munis de fibres optiques 9a.

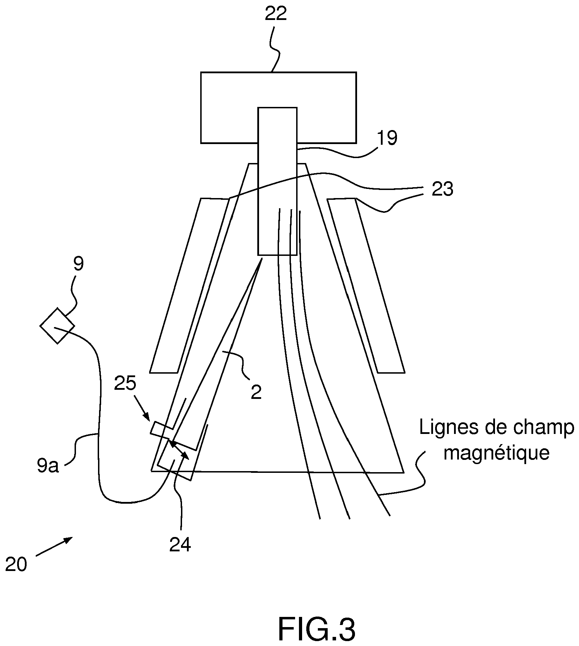

La figure 3 représente un exemple de tuyère 20, munie d'un mécanisme de maintien et d'avancement d'une barre de propulsif 19. Un laser déporté 9 est représenté avec une fibre optique 9a pour émettre un faisceau laser 2 en direction du barreau 19 de propulsif.

La tuyère 20 peut comprendre des bobines magnétiques 23 permettant d'améliorer la canalisation flux de plasma créé par l'impact du ou des faisceaux laser 2 sur le corps spatial cible ou propulsif.

La tuyère 20 peut comprendre un système optique 24 pour focaliser plus précisément le faisceau laser, et/ou un flux de gaz 25 pour protéger l'optique du flux de particule créé par l'impact du laser sur le barreau de propulsif 19.

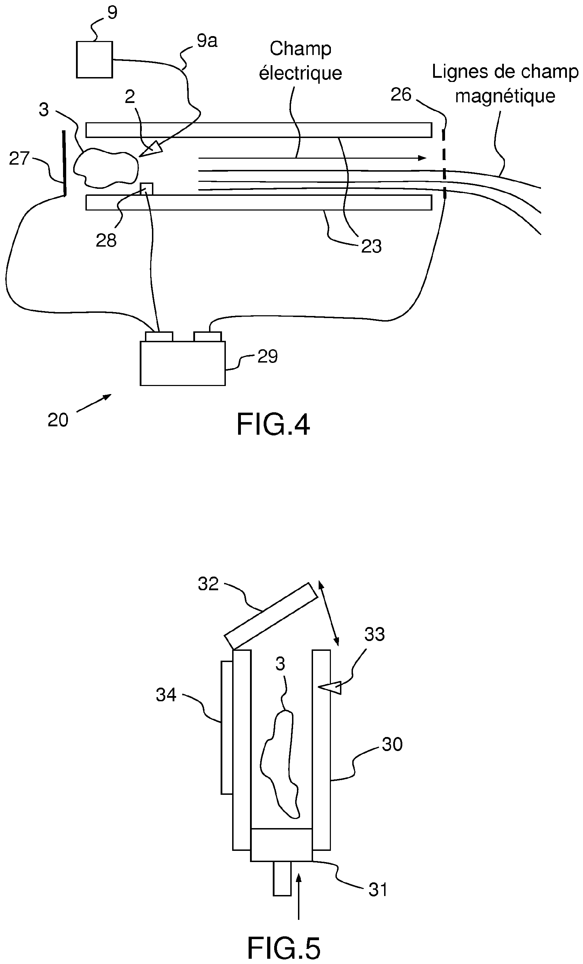

La figure 4 représente schématiquement une tuyère 20 avec grille 26, et un laser déporté 9 muni d'une fibre optique 9a. La tuyère comprend une plaque 27 permettant de créer un champ électrique uniforme dans la cavité de la tuyère, et une électrode 28. Un générateur à haute tension 29 relié à la grille 26 et à la plaque 27.

La figure 5 représente un exemple d'ensemble four/compacteur 18, comprenant un cylindre muni d'un piston 31, d'un capot 32, et d'un système d'injection de liant optionnel, afin de faire fondre et/ou lier tout ou partie d'un corps spatial cible 3.

L'émission d'un faisceau laser 2 permet de générer une force qui génère un couple sur corps spatial cible 3 capturé et éventuellement traité.

Le dispositif 6 de gestion de l'attitude d'un corps spatial cible 3 à capturer gère aussi le ou les lasers 9 et déterminent l'attitude du corps spatial cible 3.

Le dispositif 6 de gestion de l'attitude d'un corps spatial cible 3, peut comprendre un générateur de force/couple, en l'espèce le ou les lasers 9. Le dispositif 6 de gestion de l'attitude d'un corps spatial cible 3 comprend également des éléments de gestion de la direction du ou des lasers 9, des éléments de gestion de la focalisation du ou des lasers 9, des éléments de gestion du niveau de couple généré par le ou les lasers 9, et des éléments de protection de l'optique du ou des lasers 9.

Les éléments de gestion de la direction du ou des lasers 9 peuvent comprendre des éléments de contrôle d'attitude du satellite 1, et/ou un mécanisme d'orientation du ou des lasers 9, et/ou un mécanisme d'orientation des fibres optiques 9a, et/ou un ensemble optique orientable. En variante, le satellite 1 peut comprendre une pluralité de lasers pré-orientés.

Les éléments de gestion de la focalisation d'un laser 9 peuvent comprendre des lentilles et/ou des miroirs.

Les éléments de gestion du niveau de couple généré par le ou les lasers 9 peuvent comprendre un ensemble de modulation en amplitude du ou des lasers 9, et/ou un ensemble de modulation en durée d'impulsion du ou des lasers 9, et/ou un ensemble de modulation de la focalisation du ou des lasers 9.

Les éléments de protection de l'optique d'un laser 9 peuvent comprendre un flux de gaz devant l'ensemble optique.

Le fonctionnement du dispositif 6 de gestion de l'attitude du corps spatial cible 3 à capturer est décrit ci-après.

Le dispositif 5 de gestion d'attitude et d'orbite du satellite 1 détermine la position absolue du satellite 1, et l'attitude du satellite 1.

Le dispositif 6 de gestion de l'attitude du corps spatial cible 3 à capturer détermine la position relative du corps spatial cible 3 par rapport au satellite 1.

A ces fins sont utilisés des algorithmes connus, soit directement à partir des données brutes, soit à partir des données filtrées afin d'améliorer l'estimation. Il peut s'agir de simples filtres rejetant une bande de fréquences particulièrement bruitée ou alors un filtre plus élaboré comme un filtre de Kalman.

On calcule ensuite une consigne en attitude et/ou en vitesse angulaire de rotation du corps spatial cible 3 en utilisant soit une valeur constante soit une valeur évoluant dans le temps.

On calcule ensuite une erreur d'attitude et/ou de vitesse angulaire du corps spatial cible 3 par différence entre la vitesse angulaire estimée et/ou l'attitude estimée, et la consigne correspondante.

On commande alors l'attitude et l'orbite du satellite 1, et le dispositif 6 de gestion de l'attitude du corps spatial cible 3 à capturer calcule un couple à générer sur le corps spatial cible 3, puis le point du corps spatial cible 3 à impacter, la modulation de la focale et le niveau du couple.

Le dispositif 6 de gestion de l'attitude du corps spatial cible 3 calcule ensuite la direction du faisceau du ou des lasers 9 et gère la direction du ou des faisceaux laser 2.

Le dispositif 6 de gestion de l'attitude du corps spatial cible 3 gère également la focalisation du ou des faisceaux 2 du ou des lasers 9, et le niveau du couple généré.

Les algorithmes classiques utilisés ne sont pas décrits en détail.

Ci-suit la description du principe de modulation du couple appliqué sur le corps spatial cible 3.

Le couple appliqué sur le corps spatial cible 3 est donné par l'équation :

$$\vec{T} = \overrightarrow{OP} \wedge \vec{F}$$

dans laquelle :

- $\vec{T}$ représente le couple appliqué sur l'élément cible, en N.m ;

- $\vec{F}$ est la force créée par le ou les lasers 9, en N ;

- $\overrightarrow{OP}$ est le vecteur reliant le centre de gravité du corps spatial cible 3 et le point d'application de la force $\vec{F}$;

Il est donc possible de faire varier le couple appliqué au corps spatial cible 3 en faisant varier le bras de levier ($\overrightarrow{OP}$) à force $\vec{F}$ constante, et/ou en faisant varier la force appliquée $\vec{F}$ (en direction ou en norme).

Le coefficient de couplage en N/W pour un laser impulsionnel dans un régime de plasma établi est donné par l'équation suivante:

$$C_m = 1.84\,e - 4\,\frac{\Psi^{\frac{9}{16}} \cdot A^{-\frac{1}{8}}}{\left(I \cdot \lambda \cdot \sqrt{\tau}\right)^{\frac{1}{4}}}$$

- dans laquelle
- $I$ représente l'intensité du laser, en en W/cm$^2$;
- $\lambda$ représente la longueur d'onde du laser, en m ;
- $\tau$ représente la durée de l'impulsion, en s ;
- $A$ représente le numéro de masse atomique moyen de la surface du corps spatial cible 3 à l'endroit de l'impact ; et ;
- $\Psi$ représente un coefficient d'ionisation proche de 1 en régime établi, en adimensionnel.

A partir de cette équation, il est possible de déterminer la force générée lors de l'impact d'un faisceau laser en connaissant la puissance moyenne en W apportée par le faisceau laser. La force moyenne exercée est utilisée pour la calcul de l'écart de vitesse delta-V pour les changements d'orbite, et est donnée par l'équation suivante :

$$F_{moyenne} = C_m \cdot P_{moyenne}$$

dans laquelle

$F_{moyenne}$ représente la norme de la force à générer sur le corps spatial cible 3 au niveau d'un impact de laser, en N ;
$C_m$ représente le coefficient de couplage pour un laser impulsionnel considéré dans un régime de plasma établi, en N/W ; et
$P_{moyenne}$ représente la puissance moyenne du laser considéré, en W.

Il est possible de faire varier l'intégrale de la force sur une durée :

- en modulant le nombre d'impulsion dans le temps ;
- en modulant la durée des impulsions laser :
- en modifiant la longueur d'onde du laser ; ou
- en modifiant l'intensité du laser.

La modification de l'intensité du laser peut être effectuée grâce à un dispositif de collimation. En effet, l'intensité s'exprime avec l'équation suivante :

$$I = \frac{P_{max}}{S}$$

dans laquelle :

- $P_{max}$ représente la puissance maximum du laser, en W ; et
- $S$ représente la surface sur laquelle est concentré le laser, en cm$^2$.

Il est donc possible de faire diminuer l'intensité du laser en délocalisant celui-ci. L'effet est alors une augmentation du coefficient de couplage et donc une augmentation de la force appliquée.
La sélection du point à impacter sur le corps spatial cible 3 à un instant donné peut être faite de différentes manières, de préférence à partir d'un modèle numérique des surfaces du corps spatial cible 3. Pour chacune des surfaces élémentaires, il faut d'abord déterminer si elles sont visibles depuis le laser 9 considéré, par exemple avec un algorithme de lancer de rayons. Seules les surfaces visibles doivent être considérées. Pour chacune de ces surfaces, il faut calculer :

- le produit vectoriel entre un vecteur reliant le centre de gravité du corps spatial cible et un point d'impact de laser sur la cible et un vecteur normalisé de direction normale à la surface au point d'impact et de sens vers l'intérieur du corps spatial cible. Ce produit donne le niveau de bras de levier atteignable par un impact de faisceau laser sur la surface considérée ; et
- l'angle entre la normale à la surface et le vecteur reliant le point d'impact du laser considéré. Cet angle affecte la focalisation du laser en "étalant" la tache lumineuse créée par le laser. On considère que l'on a un point d'impact même si en réalité il s'agit d'une faible surface d'impact du laser considéré, que l'on peut assimiler à un point, tel le point central de cette faible surface.

A caractéristiques d'impulsion laser identiques, il est possible de modifier le niveau de couple généré en choisissant le point d'impact à partir de ces informations.

**Revendications**

1. Satellite (1) à propulsion laser par ablation comprenant :

 - un dispositif (5) de gestion d'attitude et d'orbite du satellite (1);
 - un dispositif (7) de communication avec l'extérieur ;
 - un dispositif (8) de propulsion par ablation laser comprenant un ou plusieurs lasers (9) et un module de gestion du ou des lasers; **caractérisé en ce que** le satellite comprend :

 un dispositif (4) de capture et éventuellement de traitement d'un corps spatial cible (3) ;
 un dispositif (11) d'inspection visuel du corps spatial cible (3) ; et **en ce que** le module de gestion du ou des lasers est adapté pour déterminer le ou les faisceaux laser à générer sur le corps spatial cible (3) capturé en fonction du déplacement souhaité pour le satellite (1).

2. Satellite (1) selon la revendication 1, comprenant un dispositif (6) de gestion de l'attitude d'un corps spatial cible (3) à capturer commandant un ou plusieurs lasers (9) et adapté pour déterminer l'attitude et/ou la vitesse de rotation angulaire du corps spatial cible (3), et la distance séparant le corps spatial cible (3) et le satellite (1).

3. Satellite (1) selon la revendication 1 ou 2, dans lequel le dispositif (6) de gestion de l'attitude du corps spatial cible (3) à capturer comprend un lidar, et/ou une caméra stéréoscopique, et/ou d'une caméra munie d'un dispositif de détermination de la distance à partir d'une succession temporelle d'images de la caméra, et/ou d'un dispositif configuré pour tenir compte d'un modèle numérique représentatif de la forme et/ou de la texture et/ou des matériaux du corps spatial cible (3).

4. Satellite (1) selon l'une des revendications précédentes, dans lequel le dispositif (5) de gestion d'attitude et d'orbite du satellite (1) comprend un capteur de direction solaire, et/ou un magnétomètre, et/ou un capteur viseur d'étoiles, et/ou un capteur de détermination de la Terre, et/ou récepteur de système de navigation par satellites, et/ou des tuyères, et/ou des roues à réaction, et/ou des actionneurs gyroscopiques, et/ou des magnéto-coupleurs, et/ou un accéléromètre, et/ou une centrale inertielle.

5. Satellite (1) selon l'une des revendications précédentes, dans lequel le dispositif (6) de gestion de l'attitude du corps spatial cible (3) à capturer est configuré pour tenir compte d'un modèle de perturbation solaire et/ou d'un modèle de perturbation atmosphérique et/ou d'un modèle de perturbation magnétique.

6. Satellite (1) selon l'une des revendications précédentes, dans lequel le dispositif (4) de capture et éventuellement de traitement du corps spatial cible (3) comprend une interface lanceur/satellite (12) et/ou un dispositif d'accrochage (16) fixé au satellite par un élément intermédiaire (15).

7. Satellite (1) selon l'une des revendications précédentes, dans lequel un laser (9) est continu ou impulsionnel, fixe ou mobile par rapport au satellite (1), éventuellement pourvu d'un système de guidage du faisceau, et éventuellement pourvu d'un ensemble de protection de l'optique du laser par un flux de gaz.

8. Satellite (1) selon l'une des revendications précédentes, dans lequel le dispositif (4) de capture et de traitement du corps spatial cible (3) comprend un dispositif de découpe du corps spatial cible (3), et/ou un dispositif (18) de compactage du corps spatial cible, et/ou un dispositif (18) de fusion/extrusion du corps spatial cible.

9. Satellite (1) selon l'une des revendications précédentes, comprenant une tuyère (20) pour canaliser le flux de plasma créé par l'impact du ou des faisceaux laser (2) sur le corps spatial cible (3).

10. Satellite (1) selon l'une des revendications précédentes, comprenant un dispositif (23) magnétostatique pour contrôler le jet de plasma créé par l'impact du ou des faisceaux laser (2) sur le corps spatial cible (3).

11. Satellite (1) selon l'une des revendications précédentes, comprenant un dispositif (26, 27, 28, 29) électrostatique ou magnéto hydro dynamique pour accélérer le jet de plasma créé par l'impact du ou des faisceaux laser (2) sur le corps spatial cible (3).

12. Satellite (1) selon l'une des revendications précédentes, comprenant un dispositif à ondes radiofréquences pour accélérer le jet de plasma créé par l'impact du ou des faisceaux laser (2) sur le corps spatial cible (3).

13. Procédé de propulsion spatial comprenant les étapes consistant à :

    - capturer et éventuellement traiter un corps spatial cible ; et
    - utiliser le corps spatial cible comme propulsif de propulsion par ablation laser.

**Patentansprüche**

1. Satellit (1) mit Laserantrieb durch Ablation, der Folgendes umfasst:

    - eine Vorrichtung (5) zum Regeln von Lage und Orbit des Satelliten (1);
    - eine Vorrichtung (7) zum Kommunizieren mit der Außenwelt;
    - eine Vorrichtung (8) zum Antreiben durch Laserablation, die einen oder mehrere Laser (9) und ein Modul zum Verwalten der ein oder mehreren Laser umfasst;

    **dadurch gekennzeichnet, dass** der Satellit Folgendes umfasst:

    eine Vorrichtung (4) zum Erfassen und eventuell Bearbeiten eines Weltraum-Zielkörpers (3); eine Vorrichtung (11) zum visuellen Inspizieren des Weltraum-Zielkörpers (3); und dadurch, dass das Modul zum Verwalten der ein oder mehreren Laser zum Bestimmen der auf dem Weltraum-Zielkörper (3) zu erzeugenden ein oder mehreren Laserstrahlen ausgelegt ist, erfasst in Abhängigkeit der gewünschten Verschiebung für den Satelliten (1).

2. Satellit (1) nach Anspruch 1, der eine Vorrichtung (6) zum Regeln der Lage eines zu erfassenden Weltraum-Zielkörpers (3) umfasst, die einen oder mehrere Laser (9) steuert und zum Bestimmen der Lage und/oder der Winkelrotationsgeschwindigkeit des Weltraum-Zielkörpers (3) und der Distanz ausgelegt, die den Weltraum-Zielkörper (3) und den Satelliten (1) trennt.

3. Satellit (1) nach Anspruch 1 oder 2, wobei die Vorrichtung (6) zum Regeln der Lage des zu erfassenden Weltraum-Zielkörpers (3) ein Lidar und/oder eine stereoskopische Kamera und/oder eine Kamera umfasst, die mit einer Vorrichtung zum Bestimmen der Distanz auf der Basis einer zeitlichen Abfolge von Bildern der Kamera und/oder einer Vorrichtung, die konfiguriert ist zum Berücksichtigen eines digitalen Modells, das die Form und/oder die Textur und/oder die Materialien des Weltraum-Zielkörpers (3) berücksichtigt, ausgestattet ist.

4. Satellit (1) nach einem der vorherigen Ansprüche, bei dem die Vorrichtung (5) zum Regeln von Lage und Orbit des Satelliten (1) einen solaren Richtungssensor und/oder ein Magnetometer und/oder einen Sternsichtsensor und/oder einen Sensor zum Bestimmen der Erde und/oder einen Satellitennavigationssystemempfänger und/oder Düsen und/oder Reaktionsräder und/oder gyroskopische Stellantriebe und/oder Magnetkoppler und/oder einen Beschleunigungsmesser und/oder eine Trägheitseinheit umfasst.

5. Satellit (1) nach einem der vorherigen Ansprüche, wobei die Vorrichtung (6) zum Regeln der Lage des zu erfassenden Weltraum-Zielkörpers (3) zum Berücksichtigen eines solaren Störungsmodells und/oder eines atmosphärischen Störungsmodells und/oder eines magnetischen Störungsmodells konfiguriert ist.

6. Satellit (1) nach einem der vorherigen Ansprüche, bei dem die Vorrichtung (4) zum Erfassen und eventuell Bearbeiten des Weltraum-Zielkörpers (3) eine Launcher/Satellit-Schnittstelle (12) und/oder eine am Satelliten durch ein Zwischenelement (15) befestigte Andockvorrichtung (16) umfasst.

7. Satellit (1) nach einem der vorherigen Ansprüche, bei dem ein Laser (9) kontinuierlich oder pulsierend ist, fest oder mobil in Bezug auf den Satelliten (1), eventuell mit einem Strahlführungssystem ausgestattet, und eventuell mit einer Baugruppe zum Schützen der Optik des Lasers durch einen Gasfluss ausgestattet.

8. Satellit (1) nach einem der vorherigen Ansprüche, bei dem die Vorrichtung (4) zum Erfassen und Bearbeiten des Weltraum-Zielkörpers (3) eine Vorrichtung zum Schneiden des Weltraum-Zielkörpers (3) und/oder eine Vorrichtung (18) zum Verdichten des Weltraum-Zielkörpers und/oder eine Vorrichtung (18) zum Fusionieren/Extrudieren des Weltraum-Zielkörpers umfasst.

9. Satellit (1) nach einem der vorherigen Ansprüche, der eine Düse (20) zum Kanalisieren des durch das Auftreffen der ein oder mehreren Laserstrahlen (2) auf dem Weltraum-Zielkörper (3) erzeugten Plasmaflusses umfasst.

10. Satellit (1) nach einem der vorherigen Ansprüche, der eine magnetostatische Vorrichtung (23) zum Steuern des durch das Auftreffen der ein oder mehreren Laserstrahlen (2) auf dem Weltraum-Zielkörper (3) erzeugten Plasmastrahls umfasst.

11. Satellit (1) nach einem der vorherigen Ansprüche, der eine elektrostatische oder magnetohydraulische dynamische Vorrichtung (26, 27, 28, 29) zum Beschleunigen des durch das Auftreffen der ein oder mehreren Laserstrahlen (2) auf dem Weltraum-Zielkörper (3) erzeugten Plasmastrahls umfasst.

12. Satellit (1) nach einem der vorherigen Ansprüche, der eine Funkfrequenzwellenvorrichtung zum Beschleunigen des durch das Auftreffen der ein oder mehreren Laserstrahlen (2) auf dem Weltraum-Zielkörper (3) erzeugten Plasmastrahls umfasst.

13. Verfahren zum Antreiben im Weltraum, das die folgenden Schritte beinhaltet:

    - Erfassen und eventuell Bearbeiten eines Weltraum-Zielkörpers; und
    - Nutzen des Weltraum-Zielkörpers als Treibmittel zum Antreiben durch Laserablation.

**Claims**

1. Satellite (1) propelled by laser ablation comprising:

    - a device (5) for managing the attitude and the orbit of the satellite (1);
    - a device (7) for external communication;
    - a laser ablation propulsion device (8) comprising one or more lasers (9) and a module for managing the one or more lasers;

    **characterized in that** the satellite comprises:

    a device (4) for capturing and potentially for processing a target spaceborne body (3);
    a device (11) for visually inspecting the target spaceborne body (3); and **in that** the module for managing the one or more lasers is suitable for determining the one or more laser beams to be generated on the captured target spaceborne body (3) according to the movement desired for the satellite (1).

2. Satellite (1) according to claim 1, comprising a device (6) for managing the attitude of a target spaceborne body (3) to be captured controlling one or more lasers (9) and suitable for determining the attitude and/or the angular velocity of rotation of the target spaceborne body (3), and the distance separating the target spaceborne body (3) and the satellite (1).

3. Satellite (1) according to claim 1 or 2, wherein the device (6) for managing the attitude of the target spaceborne body (3) to be captured comprises a lidar, and/or a stereoscopic camera, and/or a camera provided with a device for determining distance on the basis of a temporal succession of images from the camera, and/or a device configured to take into account a digital model that is representative of the shape and/or of the texture and/or of the materials of the target spaceborne body (3).

4. Satellite (1) according to one of the preceding claims, wherein the device (5) for managing the attitude and the orbit of the satellite (1) comprises a sun sensor, and/or a magnetometer, and/or a star tracker, and/or an Earth sensor, and/or a satellite navigation system receiver, and/or nozzles, and/or reaction wheels, and/or gyroscopic actuators, and/or magnetorquers, and/or an accelerometer, and/or an inertial measurement unit.

5. Satellite (1) according to one of the preceding claims, wherein the device (6) for managing the attitude of the target spaceborne body (3) to be captured is configured to take into account a solar disturbance model and/or an atmospheric disturbance model and/or a magnetic disturbance model.

6. Satellite (1) according to one of the preceding claims, wherein the device (4) for capturing and potentially for processing the target spaceborne body (3) comprises a launcher/satellite interface (12) and/or an attachment device (16) that is attached to the satellite by an intermediate element (15).

7. Satellite (1) according to one of the preceding claims, wherein a laser (9) is continuous or pulsed, fixed or movable with respect to the satellite (1), potentially provided with a beam-guiding system, and potentially provided with an assembly for protecting the optical system of the laser using a gas stream.

8. Satellite (1) according to one of the preceding claims, wherein the device (4) for capturing and for processing the target spaceborne body (3) comprises a device for cutting up the target spaceborne body (3), and/or a device (18) for compacting the target spaceborne body, and/or a device (18) for melting/extruding the target spaceborne body.

9. Satellite (1) according to one of the preceding claims, comprising a nozzle (20) for channelling the plasma stream created by the impact of the one or more laser beams (2) on the target spaceborne body (3).

10. Satellite (1) according to one of the preceding claims, comprising a magnetostatic device (23) for controlling the plasma jet created by the impact of the one or more laser beams (2) on the target spaceborne body (3).

11. Satellite (1) according to one of the preceding claims, comprising an electrostatic or magnetohydrodynamic device (26, 27, 28, 29) for accelerating the plasma jet created by the impact of the one or more laser beams (2) on the target spaceborne body (3).

12. Satellite (1) according to one of the preceding claims, comprising a radiofrequency-wave device for accelerating the plasma jet created by the impact of the one or more laser beams (2) on the target spaceborne body (3).

13. Space propulsion method comprising the steps consisting in:

- capturing and potentially processing a target spaceborne body; and
- using the target spaceborne body as propellant for propulsion by laser ablation.

FIG.1

FIG.2

Lignes de champ
magnétique

FIG.3

Champ
électrique

Lignes de champ
magnétique

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6530212 B